# FASCICULE DE BREVET EUROPEEN

(11) **EP 4 225 644 B1**
(45) Date de publication et mention de la délivrance du brevet: **28.01.2026**
(21) Numéro de dépôt: 21787417.1
(22) Date de dépôt: 06.10.2021
(51) Int. Cl.: B64D 15/02, B64D 41/00

(54) **SYSTÈME DE PROTECTION GIVRAGE À PILE À COMBUSTIBLE**
NUTZUNG DER ABWÄRME EINER BRENNSTOFFZELLE IN EINTEISUNGSSYSTEMEN
ANTI-ICING SYSTEM USING WASTE HEAT OF A FUEL CELL

(30) Priorité: 07.10.2020 FR 2010250
(43) Date de publication de la demande: 16.08.2023
(73) Titulaire: Liebherr-Aerospace Toulouse SAS, 31200 Toulouse (FR)
(72) Inventeur: PRINCE, Karine, 31016 TOULOUSE CEDEX 2 (FR); LAVERGNE, David, 31016 TOULOUSE CEDEX 2 (FR)
(74) Mandataire: Bringer IP
(86) Numéro de dépôt international: PCT/EP2021/077521
(87) Numéro de publication internationale: WO 2022/074040

(56) Documents cités:
- EP-A1- 3 446 961
- WO-A1-2013/140306
- WO-A2-2009/127652
- FR-A1- 2 996 064
- US-A- 5 228 643
- US-A1- 2013 260 273
- US-A1- 2013 331 019
- US-A1- 2015 191 238
- US-A1- 2016 036 071

## Description

### Domaine technique de l'invention

L'invention concerne un système de protection givrage. En particulier, l'invention concerne un système de protection givrage conçu pour être utilisé dans un véhicule, en particulier dans un aéronef, pour éviter la formation de givre ou enlever du givre déjà formé dans les zones de l'aéronef sensibles à ladite formation de givre comme les voilures, les moteurs propulsifs, le fuselage, la dérive, le plan horizontal, etc.

### Arrière-plan technologique

Dans un aéronef, les systèmes de protection givrage sont généralement réalisés par soufflage d'air chaud ou par des tapis électriques cyclés en puissance permettant de tenir la température de la surface extérieure de la pièce que l'on souhaite protéger à une température positive.

Une autre solution classique pour certains aéronefs, notamment les aéronefs de taille réduite, est d'utiliser des boudins disposés sur le bord d'attaque et qui cassent le givre accrété grâce à une injection d'air sous pression à intervalle régulier.

Les tapis électriques sont par exemple alimentés en électricité par une pile à combustible ou un générateur électrique relié à un moteur propulsif ou un groupe auxiliaire de puissance de l'aéronef, et génèrent de la chaleur.

D'autres solutions ont été proposées par l'utilisation de système à boucle diphasique. Ces systèmes sont toutefois complexes, ne sont pas adaptés à des hautes puissances, et présentent des problématiques difficiles à résoudre dans un aéronef du fait de la gravitation et de l'orientation et des mouvements variables de l'aéronef.

Le document FR2996064A1 divulgue une installation embarquée dans un aéronef comprenant une pile à combustible et un circuit de circulation d'un liquide consommable, comprenant des échangeurs de chaleurs destinés à échanger de la chaleur avec différents fluides entrant ou sortant de la pile à combustible. L'installation peut être utilisée pour dégivrer les ailes de l'aéronef.

Les inventeurs ont cherché à trouver une alternative aux systèmes de protection givrage de l'art antérieur.

### Objectifs de l'invention

L'invention vise à fournir un système de protection givrage permettant d'utiliser la chaleur de piles à combustible plutôt que l'électricité fournie par lesdites piles.

L'invention vise en particulier à fournir, dans au moins un mode de réalisation, un système de protection givrage permettant la réduction de la puissance électrique nécessaire dans l'aéronef sur lequel il est embarqué.

L'invention vise aussi à fournir, dans au moins un mode de réalisation de l'invention, un système de protection givrage permettant de limiter l'impact trainées du système de refroidissement des piles à combustible embarquées dans l'aéronef.

L'invention vise aussi à fournir, dans au moins un mode de réalisation de l'invention, un système de protection givrage fiable et redondant.

### Exposé de l'invention

Pour ce faire, l'invention concerne un système de protection givrage d'une surface extérieure d'un aéronef, comprenant une première pile à combustible et une deuxième pile à combustible, caractérisé en ce qu'il comprend :
- au moins un premier circuit de liquide configuré pour faire circuler un premier liquide de refroidissement de la première pile à combustible,
- au moins un deuxième circuit de liquide configuré pour faire circuler un premier liquide de protection givrage,
- au moins un troisième circuit de liquide configuré pour faire circuler un deuxième liquide de refroidissement de la deuxième pile à combustible,
- au moins un quatrième circuit de liquide configuré pour faire circuler un deuxième liquide de protection givrage,
- au moins un ensemble (30a, 30b, 30c, 30d) d'échangeurs, chaque ensemble d'échangeurs comprenant au moins un premier échangeur de protection givrage agencé sur la surface extérieure de l'aéronef à protéger et configuré pour être traversé par le premier liquide de protection givrage lorsqu'il circule dans le deuxième circuit de liquide, et un deuxième échangeur de protection givrage agencé sur la surface extérieure de l'aéronef à protéger et configuré pour être traversé par le deuxième liquide de protection givrage lorsqu'il circule dans le quatrième circuit de liquide, le premier échangeur de protection givrage et le deuxième échangeur de protection givrage d'un même ensemble d'échangeurs étant agencés pour une protection givrage d'une même surface extérieure de l'aéronef, et
- au moins un premier échangeur de chaleur liquide/liquide dans lequel le premier liquide de refroidissement forme une passe chaude et le premier liquide de protection givrage forme une passe froide, de sorte à réchauffer le premier liquide de protection givrage par transmission de chaleur provenant du premier liquide de refroidissement de la première pile à combustible, et un deuxième échangeur de chaleur liquide/liquide dans lequel le deuxième liquide de refroidissement forme une passe chaude et le deuxième liquide de protection givrage forme une passe froide, de sorte à réchauffer le deuxième liquide de protection givrage par transmission de chaleur provenant du deuxième liquide de refroidissement de la deuxième pile à combustible.

Un système de protection givrage selon l'invention permet donc d'utiliser la chaleur dégagée par les piles à combustible pendant leur fonctionnement, et dans le même temps de refroidir les piles à combustible. Le système de protection givrage permet ainsi de réduire le besoin en refroidissement des piles à combustible par une source extérieure, par exemple de l'air dynamique de type *ram air* et dans le même temps de réduire la consommation énergétique de l'échangeur thermique de protection givrage, en particulier la consommation énergétique induite par la trainée de l'avion.

Les piles à combustible du système de protection givrage n'ont pas à fournir de puissance électrique pour assurer la protection givrage, et donc peuvent être sous-dimensionnées par rapport à un système basé sur les principes actuels, où la protection givrage est assurée par des tapis électriques alimentés en électricité par les piles à combustible. Les piles à combustible, qui font partie d'un système de génération électrique de l'aéronef permettant la fourniture d'énergie électrique, peuvent ainsi utiliser l'énergie électrique produite pour alimenter d'autres dispositifs de l'aéronef.

La présence des deux piles à combustible permet d'obtenir une redondance de la fonction protection givrage de ladite surface extérieure de l'aéronef, en cas de panne d'une des deux piles à combustible.

Lorsque les liquides de refroidissement de chaque pile à combustible ont, dans un mode de fonctionnement classique, une température maximale de l'ordre de 90°C à 100°C, le système de protection givrage permet de se passer de moyens de protection de la surface contre la surchauffe, comme cela peut être nécessaire avec d'autres systèmes de protection givrage de l'art antérieur. En particulier, les liquides de protection givrage circulant dans le deuxième et le quatrième circuit de liquide sont généralement à une température inférieure aux liquides de refroidissement des piles à combustible, ce qui réduit davantage les risques de surchauffe.

La protection givrage désigne à la fois une protection de type antigivre, c'est-à-dire qui empêche la formation de givre, ou une protection de type dégivrage qui enlève du givre déjà formé en faisant fondre partiellement ou en cassant celui-ci. Une protection antigivre est prioritaire pour empêcher tout mauvais fonctionnement de la surface à protéger mais certaines surfaces peuvent nécessiter seulement un dégivrage si elles sont moins sensibles.

La surface à protéger est par exemple la voilure de l'aéronef (notamment les bords d'attaque), la nacelle, le plan horizontal, la dérive, etc. Lorsque la surface à protéger est une surface mobile, les liquides de protection givrage peuvent être conduit aux échangeurs via des conduits télescopiques permettant de s'adapter au mouvement de la surface.

La présence des échangeurs thermiques liquide/liquide permet la dissociation de la fonction refroidissement des piles à combustible, assurée par les liquides de refroidissement, et de la fonction de protection givrage, assurée par les liquides de protection givrage. La dissociation permet une meilleure fiabilité, en sécurisant chacune des fonctions. En particulier, la fonction refroidissement des piles à combustible doit être assurée de façon fiable pour éviter un dysfonctionnement des piles à combustible par échauffement de celles-ci.

En outre, le liquide de refroidissement est un liquide déionisé pour pouvoir être utilisé dans les piles à combustible (par exemple du propylène glycol déionisé ou de l'éthylène glycol déionisé), ce qui en fait un liquide plus corrosif. Ainsi, il est avantageux de limiter sa circulation aux piles à combustible et à l'échangeur liquide/liquide, tandis qu'un liquide non-déionisé (par exemple du propylène glycol ou de l'éthylène glycol) peut être utilisé comme liquide de protection givrage car il est moins corrosif.

L'invention utilise uniquement des liquides et des échangeurs liquide/liquide sans présence de système réfrigérant de type diphasique qui est plus coûteux, plus encombrant et moins fiable pour l'utilisation dans un système de protection givrage.

Avantageusement et selon l'invention, au moins un échangeur de protection givrage est un échangeur de peau configuré pour être agencé sur la surface extérieure de l'aéronef en contact direct avec l'extérieur de l'aéronef.

Selon cet aspect de l'invention, le liquide de protection givrage peut être conduit au plus proche de l'extérieur de l'aéronef, afin de maximiser la protection givrage en maximisant les échanges thermiques avec l'extérieur.

On entend par échangeur de peau un échangeur thermique qui remplace un élément de la peau de l'aéronef, qui forme la surface extérieure du fuselage de l'aéronef, tout en conservant les mêmes caractéristiques aérodynamiques que l'élément de la peau remplacé. En particulier, l'échangeur de peau n'induit pas de trainée supplémentaire.

Avantageusement et selon l'invention, au moins un échangeur de protection givrage est agencé au niveau de la voilure de l'aéronef, et forme au moins en partie un bord d'attaque de la voilure.

Selon cet aspect de l'invention, le bord d'attaque de la voilure de l'aéronef est une des surfaces les plus soumise au givre et une des surfaces les plus grandes à protéger du fait de la taille importante des voilures.

Avantageusement et selon l'invention, le premier liquide de refroidissement forme une passe chaude supplémentaire du deuxième échangeur de chaleur liquide/liquide, et le deuxième liquide de refroidissement forme une passe chaude supplémentaire du premier échangeur de chaleur liquide/liquide.

Selon cet aspect de l'invention, en cas de panne d'une des piles à combustible, le fonctionnement d'une seule pile à combustible permet un fonctionnement minimal de la fonction antigivrage pour l'ensemble des échangeurs de protection givrage reliés à l'ensemble des échangeurs liquide/liquide.

Selon un aspect de l'invention, chaque ensemble d'échangeur comprend ainsi au moins deux échangeurs de protection givrage alimentés chacun par une pile à combustible différente pour former la redondance du système en cas de panne d'une des deux piles à combustible.

Avantageusement et selon l'invention, un échangeur thermique complémentaire, agencé dans au moins un des premier ou troisième circuits de liquide, dans lequel le liquide de refroidissement de la pile à combustible forme une passe chaude.

Selon cet aspect de l'invention, l'échangeur thermique complémentaire permet de refroidir la pile à combustible à laquelle il est associé en l'absence d'utilisation de la protection givrage, notamment lorsque l'aéronef est au sol. Il peut aussi permettre un complément de refroidissement si les conditions de fonctionnement ne permettent pas de refroidir suffisamment le liquide de refroidissement de la pile à combustible avec uniquement l'échangeur liquide/liquide, par exemple dans certaines conditions de vol, lorsque la pile à combustible est très sollicitée, selon la température extérieure, etc.

L'invention concerne également un procédé de protection givrage d'une surface extérieure d'un aéronef, caractérisé en ce qu'il comprend les étapes suivantes :
- une étape de transfert de chaleur d'une première pile à combustible à un premier liquide de refroidissement de la première pile à combustible,
- une étape de transfert de chaleur d'une deuxième pile à combustible à un deuxième liquide de refroidissement de la deuxième pile à combustible,
- une étape de transfert de chaleur du premier liquide de refroidissement à un premier liquide de protection givrage dans un premier échangeur de chaleur liquide/liquide,
- une étape de transfert de chaleur du deuxième liquide de refroidissement à un deuxième liquide de protection givrage dans un deuxième échangeur de chaleur liquide/liquide,
- une étape de transfert de chaleur du premier liquide de protection givrage à un premier échangeur de protection givrage agencé sur la surface extérieure de l'aéronef à protéger
- une étape de transfert de chaleur du deuxième liquide de protection givrage à un deuxième échangeur de protection givrage agencé sur la surface extérieure de l'aéronef à protéger,
le premier échangeur de protection givrage et le deuxième échangeur de protection givrage faisant partie d'un ensemble d'échangeur et le premier échangeur de protection givrage et le deuxième échangeur de protection givrage d'un même ensemble d'échangeur étant agencés pour une protection givrage d'une même surface extérieure de l'aéronef.

Avantageusement et selon l'invention, le procédé comprend en outre une étape de commande d'augmentation de production de chaleur par au moins une pile à combustible.

Selon cet aspect de l'invention, une commande permet d'augmenter la production de la chaleur par ladite pile à combustible pour permettre une meilleure protection givrage.

L'augmentation de la production de chaleur peut par exemple se faire par augmentation de la consommation de la pile à combustible (l'énergie électrique supplémentaire crée pouvant être consommée ou stockée) ou par fonctionnement dégradé de la pile à combustible hors de son point de fonctionnement optimal.

L'invention concerne également un aéronef comprenant au moins une surface extérieure, caractérisé en ce qu'il comprend un système de protection givrage de ladite au moins une surface extérieure selon l'invention.

Avantageusement et selon l'invention, la surface extérieure comprend au moins deux zones symétriques, chaque zone étant protégée contre le givrage par au moins deux échangeurs de protection givrage d'un système de protection comprenant au moins deux piles à combustible, au moins un premier échangeur de protection givrage étant configuré pour être traversé par le premier liquide de protection givrage et au moins un deuxième échangeur de protection givrage configuré pour être traversé par le deuxième liquide de protection givrage.

Selon cet aspect de l'invention, cette configuration permet une certaine symétrie dans l'utilisation des deux piles à combustible et dans la protection au givrage des ailes. L'objectif est par exemple de s'assurer que chaque aile d'un aéronef est protégée du givrage au moins par un échangeur de protection givrage et de façon symétrique en cas de panne d'une des deux piles à combustible.

Les zones symétriques d'un aéronef sont par exemple les voilures (gauche et droite les moteurs propulsifs (le ou les moteurs sous l'aile gauche et le ou les moteurs sous l'aile droite), la dérive (face gauche et face droite), le plan horizontal (gauche et droite).

L'invention concerne également un système de protection givrage, un procédé de protection givrage et un aéronef, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un système de protection givrage selon un premier mode de réalisation de l'invention.
[Fig. 2] est une vue schématique d'un système de protection givrage selon un deuxième mode de réalisation de l'invention.
[Fig. 3] est une vue schématique d'un système de protection givrage selon un troisième mode de réalisation de l'invention.
[Fig. 4] est une vue schématique d'un système de protection givrage selon un quatrième mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

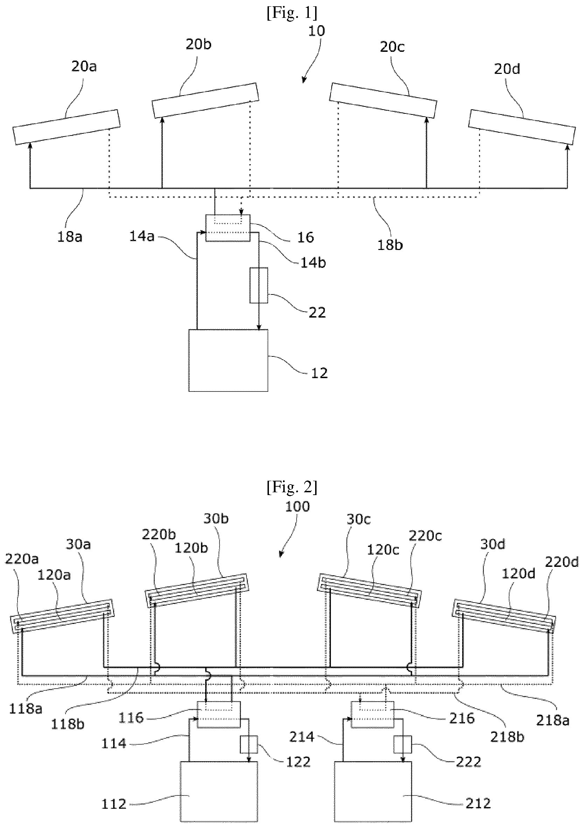

La figure 1 illustre un système 10 de protection givrage selon un premier mode de réalisation de l'invention.

Le système 10 de protection givrage comprend une pile 12 à combustible configurée pour être refroidie par un premier circuit de liquide, dans lequel circule un liquide de refroidissement lorsque le système 10 de protection givrage est en fonctionnement. Le premier circuit de liquide forme une boucle composée de deux conduits 14a, 14b reliant la pile 12 à combustible à un échangeur 16 liquide/liquide, un premier conduit 14a dans lequel le liquide de refroidissement circule de la pile 12 à combustible à l'échangeur 16 liquide/liquide et un deuxième conduit 14b dans lequel le liquide de refroidissement circule de l'échangeur 16 liquide/liquide à la pile 12 à combustible.

Les chemins en pointillés dans l'échangeur 16 liquide/liquide sont uniquement à but illustratif pour relier les entrées et sorties de chaque boucle et ne représentent pas un type d'échangeur thermique en particulier. Tout type échangeur thermique liquide/liquide compatibles avec les contraintes du système peut être utilisé.

Le système 10 de protection givrage comprend également un deuxième circuit de liquide configuré pour permettre la circulation d'un liquide antigivrage. Le deuxième circuit comprend un premier ensemble 18a de conduits, permettant au liquide antigivrage de circuler de l'échangeur 16 liquide/liquide à au moins un, ici quatre échangeurs 20a, 20b, 20c, 20d de protection givrage, et un deuxième ensemble 18b de conduits permettant au liquide antigivrage de circuler des échangeurs 20a, 20b, 20c, 20d de protection givrage vers l'échangeur 16 liquide/liquide. Les échangeurs 20a, 20b, 20c, 20d de protection givrage sont par exemple des échangeurs de peau, disposés au contact de l'air extérieur. Par exemple, deux échangeurs 20a et 20b sont agencés dans une des ailes d'un aéronef (ici l'aile gauche), et deux échangeurs 20c et 20d sont agencés dans l'autre aile de l'aéronef (ici l'aile droite).

En aval de la pile à combustible, le liquide approche les 90°C. L'écart de température avec la température rencontrée dans les conditions givrantes suffit à protéger le bord d'attaque de la voilure. La chaleur du liquide de refroidissement est ainsi transmise au liquide de protection givrage, qui transmet cette chaleur aux échangeurs de protection givrage pour dégivrer ou prévenir la formation de givre ou de glace. Le liquide de refroidissement est refroidi au passage de l'échangeur 16 liquide/liquide, afin de pouvoir servir au refroidissement de la pile 12 à combustible. Ce refroidissement est d' autant plus important que les échangeurs 20a, 20b, 20c, 20d de protection givrage refroidissent de façon importante le liquide antigivrage du fait de leur positionnement au contact de l'air extérieur.

Un échangeur 22 complémentaire permet d'apporter un complément de refroidissement si l'échangeur liquide/liquide n'est pas suffisant pour refroidir le liquide de refroidissement à la température souhaitée, ou bien pour permettre l'intégralité du refroidissement du liquide de refroidissement dans des conditions particulières, notamment lorsque l'aéronef est au sol ou en cas de panne du système de protection givrage. Cet échangeur est par exemple de type liquide/air, et peut être refroidi par un air froid par exemple de l'air dynamique de type *ram air.*

La figure 2 illustre un système 200 de protection givrage selon un deuxième mode de réalisation de l'invention.

Dans ce deuxième mode de réalisation, le système comprend deux piles 112, 212 à combustible, permettant une redondance de la fonction protection givrage.

La première pile 112 à combustible est refroidie par un premier liquide de refroidissement circulant dans un premier circuit 114 de liquide.

Un premier liquide de protection givrage circule dans un deuxième circuit 118a, 118b de liquide pour alimenter au moins un, ici quatre premiers échangeurs 120a, 120b, 120c, 120d de protection givrage. Le deuxième circuit comprend en particulier un premier ensemble 118a de conduits permettant au premier liquide de protection givrage de circuler d'un premier échangeur 116 liquide/liquide vers les quatre premiers échangeurs 120a, 120b, 120c, 120d de protection givrage, et un deuxième ensemble 118b de conduits permettant au premier liquide de protection givrage de circuler des premiers échangeurs 120a, 120b, 120c, 120d de protection givrage vers le premier échangeur 116 liquide/liquide.

Le premier liquide de refroidissement forme une passe chaude du premier échangeur 116 liquide/liquide, et le premier liquide de protection givrage forme la passe froide du premier échangeur 116 liquide/liquide.

Un premier échangeur thermique 122 complémentaire permet de compléter ou remplacer le premier échangeur 116 liquide/liquide, comme expliqué précédemment.

La deuxième pile 212 à combustible est refroidie par un deuxième liquide de refroidissement circulant dans un troisième circuit 214 de liquide.

Un deuxième liquide de protection givrage circule dans un quatrième circuit 218 de liquide pour alimenter au moins un, ici quatre deuxième échangeurs 220a, 220b, 220c, 220d de protection givrage. Le quatrième circuit comprend en particulier un troisième ensemble 218a de conduits permettant au deuxième liquide de protection givrage de circuler d'un deuxième échangeur 216 liquide/liquide vers les quatre deuxième échangeurs 220a. 220b, 220c, 220d de protection givrage, et un quatrième ensemble 218b de conduits permettant au deuxième liquide de protection givrage de circuler des deuxièmes échangeurs 220a, 220b, 220c, 220d de de protection givrage vers le deuxième échangeur 216 liquide/liquide.

Le deuxième liquide de refroidissement forme une passe chaude du deuxième échangeur 216 liquide/liquide, et le deuxième liquide de protection givrage forme la passe froide du deuxième échangeur 216 liquide/liquide.

Un deuxième échangeur thermique 222 complémentaire permet de compléter ou remplacer le deuxième échangeur 216 liquide/liquide, comme expliqué précédemment.

Les premier et deuxième échangeurs de protection givrage sont regroupés deux à deux, en formant quatre ensemble 30a, 30b, 30c et 30d d'échangeurs. Chaque ensemble d'échangeur comprend ainsi au moins deux échangeurs de protection givrage alimentés chacun par une pile à combustible différente pour former la redondance du système en cas de panne d'une des deux piles à combustible.

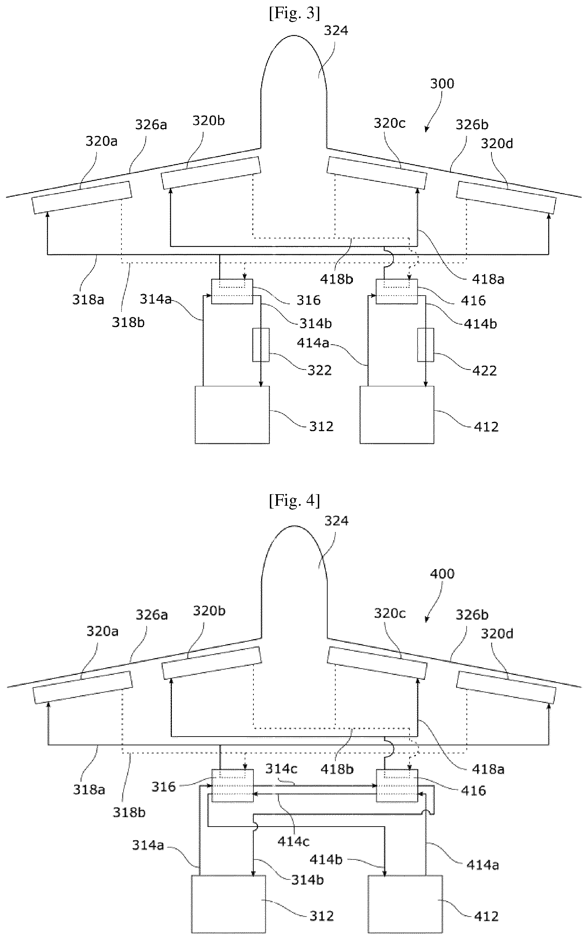

La figure 3 illustre un système 300 de protection givrage selon un troisième mode de réalisation de l'invention.

Dans ce troisième mode de réalisation, le système comprend deux piles 312, 412 à combustible, permettant une redondance de la fonction protection givrage.

La fonction protection givrage est mise en œuvre ici particulièrement pour une voilure d'un aéronef 324, comprenant une première aile dite aile 326a gauche et une deuxième aile 326b droite.

La première pile 312 à combustible est refroidie par un premier liquide de refroidissement circulant dans un premier circuit de liquide formé par des conduits 314a et 314b.

Un premier liquide de protection givrage circule dans un deuxième circuit de liquide formé par deux conduits 318a, 318b pour alimenter au moins deux, ici deux premiers échangeurs 320a, 320d de protection givrage.

Le premier liquide de refroidissement forme une passe chaude d'un premier échangeur 316 liquide/liquide, et le premier liquide de protection givrage forme la passe froide du premier échangeur 316 liquide/liquide.

Un premier échangeur thermique 322 complémentaire permet de compléter ou remplacer le premier échangeur 316 liquide/liquide, comme expliqué précédemment.

La deuxième pile 412 à combustible est refroidie par un deuxième liquide de refroidissement circulant dans un troisième circuit de liquide formé par des conduits 414a et 414b.

Un deuxième liquide de protection givrage circule dans un quatrième circuit de liquide formé par deux conduits 418a, 418b pour alimenter au moins deux, ici deux deuxième échangeurs 320b, 320c de protection givrage.

Le deuxième liquide de refroidissement forme une passe chaude d'un deuxième échangeur 416 liquide/liquide, et le deuxième liquide de protection givrage forme la passe froide du deuxième échangeur 416 liquide/liquide.

Un deuxième échangeur 422 thermique complémentaire permet de compléter ou remplacer le deuxième échangeur 216 liquide/liquide, comme expliqué précédemment.

Chaque pile 312, 412 à combustible alimente ainsi deux échangeurs, les échangeurs alimentés par une pile à combustibles étant distribués de part et d'autre de la voilure de l'aéronef.

En particulier, dans ce mode de réalisation, la première pile 312 à combustible alimente l'échangeur 320a agencé au niveau du bord d'attaque extérieur de l'aile 326a gauche et l'échangeur 320d agencé au niveau du bord d'attaque extérieur de l'aile 326b droite. La deuxième pile 412 à combustible alimente l'échangeur 320b agencé au niveau du bord d'attaque intérieur de l'aile 326a gauche et l'échangeur 320c agencé au niveau du bord d'attaque intérieur de l'aile 326b droite.

Cette configuration permet une certaine symétrie dans l'utilisation des deux piles à combustible et dans la protection au givrage des ailes. L'objectif est par exemple de s'assurer que chaque aile d'un aéronef est protégée du givrage au moins par un échangeur de protection givrage et de façon symétrique en cas de panne d'une des deux piles à combustible.

La figure 4 représente schématiquement un système 400 de protection givrage selon un quatrième mode de réalisation de l'invention.

Ce système est similaire au système de protection givrage selon le troisième mode de réalisation de l'invention, et les références utilisés sont les mêmes.

La différence entre ces deux systèmes est que le système 400 de protection givrage selon le quatrième mode de réalisation de l'invention comprend une redondance et une sécurité supplémentaire en cas de panne de l'une des piles à combustible : chaque liquide de refroidissement des piles 312, 412 à combustible forme successivement une passe chaude des deux échangeurs 316, 416 liquide/liquide grâce à une configuration croisée des circuits de liquide de refroidissement.

En particulier, le premier liquide refroidissement circule dans un premier circuit de liquide formé des conduits 314a, 314b et 314c, de façon à, après avoir refroidi la première pile 312 à combustible, traverser le premier échangeur 316 liquide/liquide en formant une passe chaude de celui-ci, puis de traverser le deuxième échangeur 416 liquide/liquide en formant une passe chaude de celui-ci, puis retourner dans la première pile 312 à combustible pour refroidir celle-ci.

De même, le deuxième liquide refroidissement circule dans un troisième circuit de liquide formé des conduits 414a, 414b et 414c, de façon à, après avoir refroidi la deuxième pile 412 à combustible, traverser le deuxième échangeur 416 liquide/liquide en formant une passe chaude de celui-ci, puis de traverser le premier échangeur 316 liquide/liquide en formant une passe chaude de celui-ci, puis retourner dans la deuxième pile 412 à combustible pour refroidir celle-ci.

Cette configuration croisée et redondante avec double passe chaude est aussi adaptable au deuxième mode de réalisation tel que décrit en référence avec la figure 2.

L'invention ne se limite pas aux modes de réalisation décrit. En particulier, le système de protection givrage peut comprendre plus de deux piles à combustibles, plus de quatre échangeurs, les échangeurs peuvent être disposés différemment, etc. Les modes de réalisation décrits en référence aux figures 3 et 4 peuvent s'appliquer à tout type de configuration symétrique, par exemple dans un aéronef sur le plan horizontal, ou sur d'autre véhicules où une symétrie des échangeurs permet de palier aux problèmes en cas de panne d'une des piles à combustible.

## Revendications

1. Système de protection givrage d'une surface extérieure d'un aéronef, comprenant au moins une première pile (12, 112, 312) à combustible et une deuxième pile (212, 412) à combustible, le système de protection givrage comprenant:
- au moins un premier circuit (14a-b, 114, 314a-c) de liquide configuré pour faire circuler un premier liquide de refroidissement de la première pile (12, 112, 312, 412) à combustible,
- au moins un deuxième circuit (18a-b, 218a-b, 418a-b) de liquide configuré pour faire circuler un premier liquide de protection givrage,
- au moins un troisième circuit (214a-b, 414a-c) de liquide configuré pour faire circuler un deuxième liquide de refroidissement de la deuxième pile (212, 412) à combustible,
- au moins un quatrième circuit (218a-b, 418a-b) de liquide configuré pour faire circuler un deuxième liquide de protection givrage,
- au moins un ensemble (30a, 30b, 30c, 30d) d'échangeurs, chaque ensemble d'échangeurs comprenant au moins un premier échangeur (20a-d, 120a-d, 320a-d) de protection givrage agencé sur la surface extérieure de l'aéronef à protéger et configuré pour être traversé par le premier liquide de protection givrage lorsqu'il circule dans le deuxième circuit (18a, 18b, 118a-b, 218a-b, 318a-b, 418a-b) de liquide, et un deuxième échangeur (220a-d, 320b-c) de protection givrage agencé sur la surface extérieure de l'aéronef à protéger et configuré pour être traversé par le deuxième liquide de protection givrage lorsqu'il circule dans le quatrième circuit (218a-b, 418a-c) de liquide, le premier échangeur de protection givrage et le deuxième échangeur de protection givrage d'un même ensemble d'échangeurs étant agencés pour une protection givrage d'une même surface extérieure de l'aéronef, et
- au moins un premier échangeur (16, 116, 316) de chaleur liquide/liquide dans lequel le premier liquide de refroidissement forme une passe chaude et le premier liquide de protection givrage forme une passe froide, de sorte à réchauffer le premier liquide de protection givrage par transmission de chaleur provenant du premier liquide de refroidissement de la première pile (12, 112, 312) à combustible, et un deuxième échangeur (216, 416) de chaleur liquide/liquide dans lequel le deuxième liquide de refroidissement forme une passe chaude et le deuxième liquide de protection givrage forme une passe froide, de sorte à réchauffer le deuxième liquide de protection givrage par transmission de chaleur provenant du deuxième liquide de refroidissement de la deuxième pile (212, 412) à combustible.

2. Système de protection givrage selon la revendication 1, dans lequel au moins un échangeur (20a-d, 120a-d, 220a-d, 320a-d) de protection givrage est un échangeur de peau configuré pour être agencé sur la surface extérieure de l'aéronef en contact direct avec l'extérieur de l'aéronef.

3. Système de protection givrage selon la revendication 2, dans lequel au moins un échangeur (20a-d, 120a-d, 220a-d, 320a-d) de protection givrage est agencé au niveau de la voilure de l'aéronef, et forme au moins en partie un bord d'attaque de la voilure.

4. Système de protection givrage selon l'une des revendications 1 à 3, dans lequel le premier liquide de refroidissement forme une passe chaude supplémentaire du deuxième échangeur (216, 416) de chaleur liquide/liquide, et le deuxième liquide de refroidissement forme une passe chaude supplémentaire du premier échangeur (116, 316) de chaleur liquide/liquide.

5. Système de protection givrage selon l'une des revendications 1 à 4, comprenant en outre un échangeur (22, 122, 222, 322, 422) thermique complémentaire, agencé dans au moins un des circuits (14a-b, 114, 214a-b, 314a-c, 414a-c) de liquide, dans lequel le liquide de refroidissement de la pile (12, 112, 212, 312, 412) à combustible forme une passe chaude.

6. Procédé de protection givrage d'une surface extérieure d'un aéronef, comprenant les étapes suivantes :
- une étape de transfert de chaleur d'une première pile (12, 112, 312) à combustible à un premier liquide de refroidissement de la première pile à combustible,
- une étape de transfert de chaleur d'une deuxième pile (212, 412) à combustible à un deuxième liquide de refroidissement de la deuxième pile à combustible,
- une étape de transfert de chaleur du premier liquide de refroidissement à un premier liquide de protection givrage dans un premier échangeur (16, 116, 316) de chaleur liquide/liquide,
- une étape de transfert de chaleur du deuxième liquide de refroidissement à un deuxième liquide de protection givrage dans un deuxième échangeur (216, 416) de chaleur liquide/liquide,
- une étape de transfert de chaleur du premier liquide de protection givrage à un premier échangeur (20a-d, 120a-d, 320a-d) de protection givrage agencé sur la surface extérieure de l'aéronef à protéger,
- une étape de transfert de chaleur du deuxième liquide de protection givrage à un deuxième échangeur (220a-d, 320b-c) de protection givrage agencé sur la surface extérieure de l'aéronef à protéger,
le premier échangeur de protection givrage et le deuxième échangeur de protection givrage faisant partie d'un ensemble d'échangeur et le premier échangeur de protection givrage et le deuxième échangeur de protection givrage d'un même ensemble d'échangeur étant agencés pour une protection givrage d'une même surface extérieure de l'aéronef.

7. Procédé de protection givrage selon la revendication 6, comprenant en outre une étape de commande d'augmentation de production de chaleur par au moins une pile (12, 112, 212, 312, 412) à combustible.

8. Aéronef comprenant au moins une surface extérieure, comprenant en outre un système (10, 100, 300, 400) de protection givrage de ladite au moins une surface extérieure selon l'une des revendications 1 à *5.*

9. Aéronef selon la revendication 8, dans lequel une surface extérieure comprend au moins deux zones symétriques, chaque zone étant protégée contre le givrage par au moins deux échangeurs de protection givrage du système de protection selon l'une des revendications 1 à 5.

## Patentansprüche

1. System zum Schutz einer Außenfläche eines Flugzeugs vor Vereisung,
mit mindestens einer ersten Brennstoffzelle (12, 112, 312) und einer zweiten Brennstoffzelle (212, 412), worin das System zum Schutz vor Vereisung umfasst:
mindestens einen ersten Flüssigkeitskreislauf (14a-b, 114, 314a-c) zum Zirkulieren einer ersten Kühlflüssigkeit von der ersten Brennstoffzelle (12, 112, 312, 412),
mindestens einen zweiten Flüssigkeitskreislauf (18a-b, 218a-b, 418a-b) zum Zirkulieren einer ersten Vereisungsschutzflüssigkeit,
mindestens einen dritten Flüssigkeitskreislauf (214a-b, 414a-c) zum Zirkulieren einer zweiten Kühlflüssigkeit aus der zweiten Brennstoffzelle (212, 412),
mindestens einen vierten Flüssigkeitskreislauf (218a-b, 418a-b) zum Zirkulieren einer zweiten Vereisungsschutzflüssigkeit,
mindestens eine Gruppe (30a, 30b, 30c, 30d) von Wärmetauschern, worin jede Gruppe von Wärmetauschern mindestens einen ersten Vereisungsschutzwärmetauscher (20a-d, 120a-d, 320a-d), der an der Außenfläche des zu schützenden Flugzeugs angeordnet und ausgestaltet ist, von der ersten Flüssigkeit zum Schutz vor Vereisung durchströmt zu werden, wenn diese im zweiten Kreislauf (18a, 18b, 118a-b, 218a-b, 318a-b, 418a-b) angeordnet ist, und einen zweiten Vereisungsschutzwärmetauscher (220a-d, 320b-c) umfasst, der an der Außenfläche des zu schützenden Flugzeugs angeordnet und ausgestaltet ist, von der zweiten Vereisungsschutzflüssigkeit durchströmt zu werden, wenn diese im vierten Kreislauf (218ab, 418a-c) strömt, worin der erste Vereisungsschutzwärmetauscher und der zweite Vereisungsschutzwärmetauscher derselben Wärmetauscheranordnung zum Vereisungsschutz derselben Außenfläche des Flugzeugs angeordnet sind, und
mindestens einen ersten Flüssigkeit/Flüssigkeit-Wärmetauscher ( 16, 116, 316), in dem die erste Kühlflüssigkeit einen warmen Durchgang und die erste Vereisungsschutzflüssigkeit einen kalten Durchgang bildet, um die erste Vereisungsschutzflüssigkeit durch Wärmeübertragung von der ersten Kühlflüssigkeit der ersten Brennstoffzelle (12, 112, 312) und einen zweiten (216, 416) Flüssigkeit/Flüssigkeit-Wärmetauscher, in dem die zweite Kühlflüssigkeit einen warmen Durchgang bildet und die zweite Vereisungsschutzflüssigkeit einen kalten Durchgang bildet, um die zweite Vereisungsschutzflüssigkeit durch Wärmeübertragung von der zweiten Kühlflüssigkeit der zweiten Brennstoffzelle (212, 412) zu erwärmen.

2. Vereisungsschutzsystem gemäß Anspruch 1, worin mindestens ein Vereisungsschutzwärmetauscher (20a-d, 120a-d, 220a-d, 320a-d) ein Mantelwärmetauscher ist, der ausgestaltet ist, an der Außenfläche des Flugzeugs in direktem Kontakt mit der Außenseite des Flugzeugs angeordnet zu sein.

3. Vereisungsschutzsystem nach Anspruch 2, worin mindestens ein Vereisungsschutzwärmetauscher (20a-d, 120a-d, 220a-d, 320a-d) an der Tragfläche des Flugzeugs angeordnet ist und mindestens teilweise eine Vorderkante der Tragfläche bildet.

4. Vereisungsschutzsystem nach einem der Ansprüche 1 bis 3, worin die erste Kühlflüssigkeit einen zusätzlichen Warmdurchlauf des zweiten Flüssigkeits-/Flüssigkeits-Wärmetauschers (216, 416) bildet und die zweite Kühlflüssigkeit einen zusätzlichen Warmdurchlauf des ersten Flüssigkeits-/Flüssigkeits-Wärmetauschers (116, 316) bildet.

5. Vereisungsschutzsystem nach einem der Ansprüche 1 bis 4, das zusätzlich einen ergänzenden Wärmetauscher (22, 122, 222, 322, 422) umfasst, der in mindestens einem der Flüssigkeitskreisläufe (14a-b, 114, 214a-b, 314a-c, 414a-c) angeordnet ist, in dem die Kühlflüssigkeit der Brennstoffzelle (12, 112, 212, 312, 412) einen warmen Durchgang bildet.

6. Verfahren zum Schutz einer Außenfläche eines Flugzeugs vor Vereisung, das die Schritte umfasst:
einen Schritt der Wärmeübertragung von einer ersten Brennstoffzelle (12, 112, 312) auf eine erste Kühlflüssigkeit der ersten Brennstoffzelle,
einen Schritt der Wärmeübertragung von einer zweiten Brennstoffzelle (212, 412) auf eine zweite Kühlflüssigkeit der zweiten Brennstoffzelle,
einen Schritt der Wärmeübertragung von der ersten Kühlflüssigkeit auf eine erste Vereisungsschutzflüssigkeit in einem ersten Flüssigkeit/Flüssigkeit-Wärmetauscher (16, 116, 316),
einen Schritt der Wärmeübertragung von der zweiten Kühlflüssigkeit auf eine zweite Vereisungsschutzflüssigkeit in einem zweiten (216, 416) von der ersten Vereisungsschutzflüssigkeit zu einer ersten Vereisungsschutzflüssigkeit,
einen Schritt des Wärmeübertragens von der ersten Vereisungsschutzflüssigkeit zu einem ersten Vereisungsschutzwärmetauscher (20a-d, 120a-d, 320a-d), der an der Außenfläche des zu schützenden Flugzeugs angeordnet ist,
ein Wärmeübertragungsschritt der zweiten Vereisungsschutzflüssigkeit einen zweiten Vereisungsschutzwärmetauscher (220a-d, 320b-c) umfasst, der an der Außenfläche des zu schützenden Flugzeugs angeordnet ist,
worin der erste Vereisungsschutzwärmetauscher und der zweite Vereisungsschutzwärmetauscher Teil einer Wärmetauscheranordnung sind und der erste Vereisungsschutzwärmetauscher und der zweite Vereisungsschutzwärmetauscher derselben Wärmetauscheranordnung zum Vereisungsschutz derselben Außenfläche des Flugzeugs angeordnet sind.

7. Verfahren zum Schutz vor Vereisung gemäß Anspruch 6, das zudem einen Schritt zur Steuerung der Erhöhung der Wärmeproduktion durch mindestens eine Brennstoffzelle (12, 112, 212, 312, 412) umfasst.

8. Flugzeug mit mindestens einer Außenfläche, das zudem ein Vereisungsschutzsystem (10, 100, 300, 400) der mindestens einen Außenfläche gemäß einem der Ansprüche 1 bis 5 umfasst.

9. Flugzeug gemäß Anspruch 8, worin eine Außenfläche mindestens zwei symmetrische Bereiche umfasst, worin jeder Bereich durch mindestens zwei Vereisungsschutzwärmetauscher des Schutzsystems gemäß einem der Ansprüche 1 bis 5 vor Vereisung geschützt ist.

## Claims

1. System for protecting an exterior surface of an aircraft from icing, comprising at least one first fuel cell (12, 112, 312) and one second fuel cell (212, 412), the system for protecting against icing comprising:
- at least one first liquid circuit (14a-b, 114, 314a-c) configured to cause to flow a first cooling liquid of the first fuel cell (12, 112, 312, 412),
- at least one second liquid circuit (18a-b, 218a-b, 418a-b) configured to cause to flow a first icing-protection liquid,
- at least one third liquid circuit (214a-b, 414a-c) configured to cause to flow a second cooling liquid of the second fuel cell (212, 412),
- at least one fourth liquid circuit (218a-b, 418a-b) configured to cause to flow a second icing-protection liquid,
- at least one group (30a, 30b, 30c, 30d) of exchangers, each group of exchangers comprising at least one first icing-protection exchanger (20a-d, 120a-d, 320a-d) arranged on the exterior surface of the aircraft to be protected and configured to have the first icing-protection liquid pass through it when it is flowing in the second liquid circuit (18a, 18b, 118a-b, 218a-b, 318a-b, 418a-b), and a second icing-protection exchanger (220a-d, 320b-c) arranged on the exterior surface of the aircraft to be protected and configured to have the second icing-protection liquid pass through it when it is flowing in the fourth liquid circuit (218a-b, 418a-c), the first icing-protection exchanger and the second icing-protection exchanger of the same group of exchangers being arranged to protect the same exterior surface of the aircraft against icing, and
- at least one first liquid/liquid heat exchanger (16, 116, 316) in which the first cooling liquid forms a hot pass and the first icing-protection liquid forms a cold pass, so as to heat the first icing-protection liquid by transmission of heat from the first cooling liquid of the first fuel cell (12, 112, 312), and a second liquid/liquid heat exchanger (216, 416) in which the second cooling liquid forms a hot pass and the second icing-protection liquid forms a cold pass, so as to heat the second icing-protection liquid by transmission of heat from the second cooling liquid of the second fuel cell (212, 412).

2. System for protecting against icing as claimed in claim 1, wherein at least one icing-protection exchanger (20a-d, 120a-d, 220a-d, 320a-d) is a skin exchanger configured to be arranged on the exterior surface of the aircraft in direct contact with the exterior of the aircraft.

3. System for protecting against icing as claimed in claim 2, wherein at least one icing-protection exchanger (20a-d, 120a-d, 220a-d, 320a-d) is arranged on the aerofoil of the aircraft, and forms, at least in part, a leading edge of the aerofoil.

4. System for protecting against icing as claimed in any one of claims 1 to 3, wherein the first cooling liquid forms an additional hot pass of the second liquid/liquid heat exchanger (216, 416), and the second cooling liquid forms an additional hot pass of the first liquid/liquid heat exchanger (116, 316).

5. System for protecting against icing as claimed in any one of claims 1 to 4, further comprising a complementary heat exchanger (22, 122, 222, 322, 422) arranged in at least one of the liquid circuits (14a-b, 114, 214a-b, 314a-c, 414a-c), wherein the cooling liquid of the fuel cell (12, 112, 212, 312, 412) forms a hot pass.

6. Method of protecting an exterior surface of an aircraft against icing, comprising the following steps:
- a step of transferring heat from a first fuel cell (12, 112, 312) to a first cooling liquid of the first fuel cell,
- a step of transferring heat from a second fuel cell (212, 412) to a second cooling liquid of the second fuel cell,
- a step of transferring heat from the first cooling liquid to a first icing-protection liquid in a first liquid/liquid heat exchanger (16, 116, 316),
- a step of transferring heat from the second cooling liquid to a second icing-protection liquid in a second liquid/liquid heat exchanger (216, 416),
- a step of transferring heat from the first icing-protection liquid to a first icing-protection exchanger (20a-d, 120a-d, 320a-d) arranged on the exterior surface of the aircraft to be protected,
- a step of transferring heat from the second icing-protection liquid to a second icing-protection exchanger (220a-d, 320b-c) arranged on the exterior surface of the aircraft to be protected,
the first icing-protection exchanger and the second icing-protection exchanger forming part of an exchanger group and the first icing-protection exchanger and the second icing-protection exchanger of the same exchanger group being arranged for protecting the same exterior surface of the aircraft against icing.

7. Method of protecting against icing as claimed in claim 6, further comprising a step of controlling an increase in production of heat by at least one fuel cell (12, 112, 212, 312, 412).

8. Aircraft comprising at least one exterior surface, further comprising a system (10, 100, 300, 400) for protecting said at least one exterior surface against icing as claimed in any one of claims 1 to 5.

9. Aircraft as claimed in claim 8, wherein an exterior surface comprises at least two symmetrical zones, each zone being protected against icing by at least two icing-protection exchangers of the protection system as claimed in any one of claims 1 to 5.
